# EUROPÄISCHE PATENTSCHRIFT

(11) **EP 1 075 400 B1**
(45) Veröffentlichungstag und Bekanntmachung des Hinweises auf die Patenterteilung: **18.08.2004**
(21) Anmeldenummer: 00906314.0
(22) Anmeldetag: 10.02.2000
(51) Int. Cl.: B60P 7/13

(54) **VERRIEGELUNGSVORRICHTUNG FÜR CONTAINER AUF EINEM FAHRZEUG**
LOCKING DEVICE FOR CONTAINERS ON A VEHICLE
DISPOSITIF DE VERROUILLAGE POUR CONTENEURS PLACES SUR UN VEHICULE

(30) Priorität: 04.03.1999 DE 29903940 U
(43) Veröffentlichungstag der Anmeldung: 14.02.2001
(73) Patentinhaber: Hamburger Patent Schmiede GmbH, 21079 Hamburg (DE)
(72) Erfinder: METTERNICH, Heinz, Rüdiger, D-21079 Hamburg (DE)
(74) Vertreter: DIEHL GLAESER HILTL & PARTNER
(86) Internationale Anmeldenummer: PCT/EP2000/001086
(87) Internationale Veröffentlichungsnummer: WO 2000/051842

(56) Entgegenhaltungen:
- DE-C- 19 718 528
- DE-U- 7 136 868
- DE-U- 29 712 120
- US-A- 4 108 081
- US-A- 4 352 613

## Beschreibung

Die Erfindung bezieht sich auf eine Vorrichtung zum Verriegeln von Containern auf Fahrzeugen, aufweisend einen Riegelbolzen, der in einem Verriegelungsgehäuse bewegbar gehaltert ist, und einen Antrieb, um den Riegelbolzen zwischen Freigabe- und Riegelstellung hin- und her zu bewegen, entsprechend dem Oberbegriff des Patentanspruches und zwar zur Verriegelung eines Containers auf der Ladefläche bzw. dem Chassis eines Fahrzeuges mit nach oben vorstehenden Verriegelungsteilen mit einem zum Langloch des Beschlages eines Containers passenden Umriss.

Es ist eine gattungsgemässe Vorrichtung bekannt (EP 0 051 107 B1) zum stirnseitigen Verriegeln von Containern an Fahrgestellen (Stirnverriegelung), mit einem Riegelbolzen, der in einer Führung etwa parallel zur Längsachse des Fahrgestells zwischen einer Riegel- und einer Freigabestellung bewegbar und an einen in einer Halterung schwenkbaren Betätigungsgriff angekoppelt ist. Hierbei sind die Führung und Halterung gemeinsam an einer senkrecht zur Bewegungsebene des Betätigungsgriffes ausgerichteten Montageplatte fest angeordnet, wobei sich die Montageplatte auf derjenigen Seite der Führung befindet, die dem verriegelnden Teil des Riegelbolzens zugekehrt ist.

Wenn also Container auf dem Chassis eines Fahrzeuges transportiert werden sollen, ist ein Verriegelungsvorgang nötig. Wesentlich ist hierbei, dass der Container an der richtigen Stelle auf das Chassis aufgesetzt wird. Nunmehr muss eine Bedienungsperson von Hand einen Hebel umlegen, um den Verriegelungsteil in dem Langloch für die Fahrt festzusetzen. Misslich ist hierbei, dass dieser Vorgang von Hand für jeden einzelnen Eckbeschlag durchgeführt werden muss.

Bei der vorliegenden Erfindung geht es nun darum, die Verriegelung eines Containers auf dem Chassis eines Fahrzeuges selbsttätig durchzuführen.

Erreicht wird dies dadurch, dass der Riegelbolzen sowohl axial bewegbar als auch um seine Achse drehbar in dem Verriegelungsgehäuse gelagert ist,
der Riegelbolzen an seinem im Verriegelungsgehäuse befindlichen Teil an seinem Umfang sowohl mit einem Zahnkranz als auch mit einer zum Umfang des Riegelbolzens tangentialen ansteigenden Rampe (ausgebildet ist;
ein Keilschlitten im Verriegelungsgehäuse hin- und herbeweglich und verschwenkbar gehaltert ist und vermittels seines Antriebes (hydraulisch, pneumatisch, elektromechanisch oder dergl.) zwischen der der Freigabe- und der der Riegelstellung entsprechenden Stellung antreibbar ist;
der Keilschlitten mit einer Zahnstange ausgebildet ist, die mit dem Zahnkranz des Riegelbolzens während eines Teiles der Bewegegung des Keilschlittens im Eingriff ist und dem Riegelbolzen eine 90°-Drehung erteilt und
dass der Keilschlitten mit einer Rampe oder einem Keil ausgebildet ist, der mit der Rampe des Riegelbolzenz während eines anderen Teils der Bewegung des Keilschlittens in Schiebeeingriff angeordnet ist und dem Riegelbolzen eine axiale Bewegung erteilt.

Gemäß der Erfindung ist ein Antrieb vorgesehen, der den Verriegelungsteil in das zugehörige Langloch des Container-Beschlages einführt und dreht und schließlich sicherstellt, dass der Verriegelungsteil in die Verriegelungslage geführt wird und in dieser verbleibt, bis eine Entriegelung vorgenommen wird.

Es handelt sich um Bewegungsvorgänge des Riegelbolzenz, die einander entgegengesetzt sind. Es ist ohne weiteres denkbar, dass diese Bewegungen mittels separater Antriebe durchgeführt werden, was aber bedeuten würde, dass ein erheblicher apparativer Aufwand zur Realisierung der grundsätzlichen Idee der vorliegenden Erfindung notwendig wäre.

Nach einer Weiterentwicklung der vorliegenden Erfindung sollen die erforderlichen Bewegungen, wie sie vorangehend beschrieben worden sind, mit einem einzigen Antrieb bewerkstelligt werden. Dies bedeutet, dass mit einer einzigen Einrichtung die einzelnen unterschiedlich gerichteten Arbeitsbewegungen realisiert werden, und zwar auch in zeitlich abgestimmter Steuerung zueinander.

Nach einer besonders bevorzugten Ausführungsform der Erfindung wird ein einziger Antrieb verwendet, der lediglich Linearbewegungen ausführt. Für einen solchen Antrieb kommt ein sog. Membranspeicherantrieb in Frage, der in der Fahrzeugtechnik schon seit längerer Zeit im Zusammenhang mit dem Anlegen der Bremse Einsatz findet. Er erhält seine Energie über Pneumatikleitungen, wobei die Druckluft dafür sorgt, dass der Antrieb stets in der Arbeitslage gehalten wird. Entweicht die Druckluft, so kehrt die Membran des Membranspeichers in die entlastete Lage zurück, was durch eine Feder bewerkstelligt wird. Beim Einsatz an einer Bremse dient dieser Membranspeicher dazu, die Bremsbacken von der Bremsscheibe fernzuhalten. Der Bremsvorgang wird durch Wegnahme des pneumatischen Drucks eingeleitet, so dass die Bremsbacken die Bremsscheibe umgreifen können, um das Fahrzeug abzubremsen.

Ein derartiger Membranspeicher wird hier bei der vorliegenden Erfindung nun bevorzugt eingesetzt, um über einen keilförmigen Steuerteil die gewünschten Bewegungen für das Einführen des Riegelteils in das Langloch eines Beschlages herzuleiten. Die Drehbewegung wird ebenfalls von diesem Antrieb bewältigt, jedoch dient hierzu ein Hebel am Riegelteil und eine Zahnstange am Steuerteil.

Es ist ersichtlich, dass durch einfache Hin- und Herbewegung des Steuerteils alle erforderlichen Bewegungen durchgeführt werden können. Die einzelnen Bewegungen werden über zueinander komplementär ausgebildete Flächen, vorzugsweise ebene Keilflächen und Zahnflächen ausgeführt, so das insgesamt ein Mechanismus entstanden ist, der mit einfachsten mechanischen Mitteln die erforderlichen gesteuerten Bewegungen ausführt, ohne das Schwierigkeiten in der rauhen Praxis des Containertransportes zu befürchten sind.

Ein Fahrzeug, das mit den entsprechenden Verriegelungsmechanismen ausgebildet ist, kann in einfachster Weise eingesetzt werden, um einen Container auf der Ladefläche des Chassis betriebssicher zu verriegeln. Hat der Container nämlich die vorgesehene Lage erreicht, so bedarf es lediglich eines kurzen Impulses, um das Druckmittel von den Membranspeichern wegzunehmen, damit die erforderlichen Bewegungen für die Verriegelung durchgeführt werden.

Die Betätigung kann gemäß der Vorrichtung der Erfindung vom Fahrerhaus drahtgebunden durchgeführt werden, selbstverständlich sind auch andere Übertragungsmöglichkeiten, wie die elektromagnetische oder Infrarotübertragung von Signalen hierzu geeignet.

Es besteht die Möglichkeit, die Endlagen des hin- und herbeweglichen Steuerteils abzufühlen und dies an das Fahrerhaus weiterzuleiten, damit dort die Möglichkeit besteht, die einzelnen Arbeitsvorgänge zu überwachen.

Ebenso können andere Antriebe eingesetzt werden, z. B. Kolben-Zylinder-Antriebe, die mittels eines Druckmittels betätigt werden.

Die Erfindung wird nachstehend anhand der Zeichnungen beispielsweise erläutert.
- Fig. 1: zeigt eine Längsansicht eines Riegelbolzen gemäß der Erfindung.
- Fig. 2: zeigt eine seitliche Ansicht eines Keilschlittens.

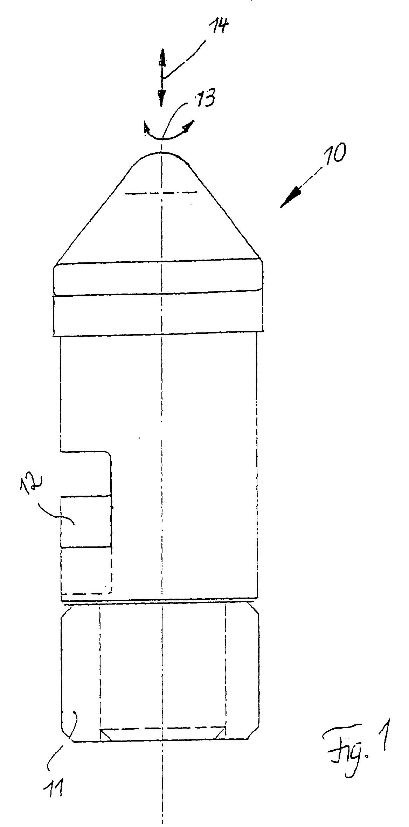

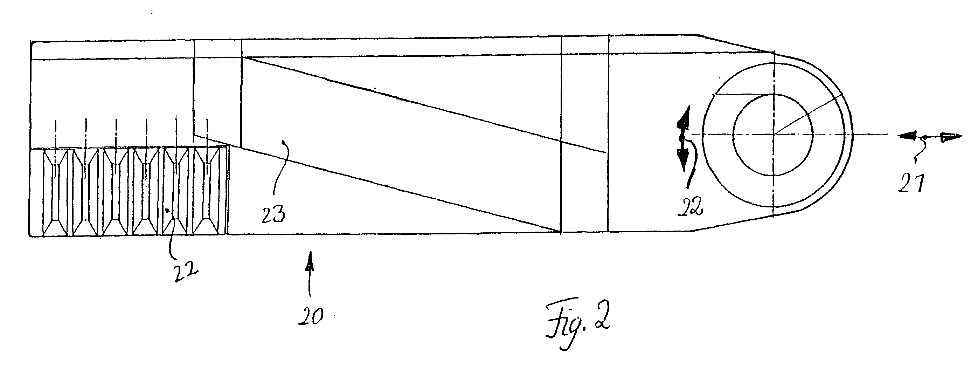

Die wesentlichen Teile der Vorrichtung gemäß der Erfindung sind ein Riegelbolzen 10 (Fig. 1) sowie ein Keilschlitten 20 (Fig. 2). Diese Teile sind in einem nicht gezeigten Verriegelungsgehäuse gelagert und werden vermittels eines nicht gezeigten Antriebes (21, 22, Fig. 2) betätigt.

Der Riegelbolzen 10 hat in seinem oberen Bereich die übliche Form, wie sie von Verriegelungen her bekannt ist, wenn es darum geht, einen Container an einem Fahrzeug mit Hilfe der üblichen Beschläge zu verriegeln.

Zur Erläuterung der Bewegung ist mit Hilfe eines Pfeiles 14 angedeutet worden, dass der Riegelbolzen 10 axiale Bewegungen in beiden Richtungen durchführen kann. Mit Hilfe des Pfeiles 13 wird angedeutet, dass der Riegelbolzen 10 ebenso Schwenkbewegungen oder Drehbewegungen um seine Längsachse durchführen kann. Insofern unterscheidet sich der Riegelbolzen 10 nicht von bekannten Riegelbolzen, die ebenfalls diese vier Bewegungen durchführen können, um den Verriegelungsvorgang zu bewerkstelligen.

Der Riegelbolzen 10 ist in seinem unteren Teil, in dem er sich in dem nicht gezeigten Verriegelungsgehäuse befindet, mit einem Ritzel 11 ausgebildet, und es ist ersichtlich, wenn in diesem Ritzel ein Zahnrad oder eine Zahnstange kämmt, der Riegelbolzen 10 eine Drehbewegung durchführt.

Weiterhin ist der Riegelbolzen 10 in seinem unteren im Gehäuse befindlichen Teil mit einer Rampe 12 ausgebildet, die in Bezug auf die Außenoberfläche des Riegelbolzen 10 tangential verläuft. Es ist ersichtlich, dass wenn auf dieser Rampe 12 ein Teil im Eingriff ist und dieser Teil senkrecht zur Papierebene bewegt wird, der Riegelbolzen 10 axiale Bewegungen ausführt.

Der Riegelbolzen 10 kann die geschilderten Bewegungen durchführen, wenn er entsprechend axial und radial gelagert ist, was kein Problem darstellt. Ebenfalls muss dafür Sorge getragen werden, dass der Riegelbolzen 10 die axialen Bewegungen durchführen kann, ohne hierbei den Eingriff eines Zahnteiles in den Ritzel 11 des Riegelbolzens 10 zu stören.

Fig. 2 ist eine Ansicht des Keilschlittens 20, der im wesentlichen die Form eine Stabes oder eines Quaders aufweist, d.h. durchaus quadratischen Querschnitt haben kann. Der Keilschlitten 20 ist an seinem rechten Ende mit einem Antrieb verbunden, der im einzelnen nicht gezeigt ist, aber in einen Durchgang eingreift, so dass der Riegelschlitten 20 hin- und hergehende Bewegungen ausüben kann, wie dies durch den Doppelpfeil 21 angedeutet ist. Bei einem Antrieb in Richtung des Pfeiles 21 kann der Keilschlitten 20 aber auch Schwenkbewegungen ausführen, so wie dies durch den Doppelpfeil 22 angedeutet ist. Derartige Antriebe stehen zur Verfügung und können die gewünschten Bewegungen aus einem lineraren Antrieb herleiten.

An dem entgegengesetzten Ende des Keilschlittens 20 befindet sich eine Zahnung oder Zanstange 22, wobei die Zähne so ausgebildet sind, dass sie mit dem Ritzel 11 einen Antriebseingriff ausüben können. Zu diesem Zweck wird der Keilschlitten 20 in eine entsprechende Lage versetzt, so dass er einen im wesentlichen bei 90° liegenden Winkel zur Achse des Riegelbolzen 10 einnimmt.

In seinem mittleren Bereich ist der Keilschlitten 20 mit einer Rampe oder einem Vorsprung oder einem Keil 23 ausgebildet, der in Längsrichtung des Keilschlittens 10 leicht ansteigt und passend zur Rampe 12 des Riegelbolzen 10 ausgebildet ist. Die entsprechende Lagerung des Keilschlittens 20 stellt kein Problem dar, weil hierfür bekannte Mittel herangezogen werden, die sowohl die Bewegung in Längsrichtung als auch die Schwenkbewegung des Keilschlittens 20 zulassen.

Es ist ersichtlich, dass durch eine Bewegung in Richtung der Pfeile 21 der Keilschlitten 20 über den Zahneingriff 22, 11 dem Riegelbolzen 10 eine Drehbewegung erteilen kann.

Es ist weiterhin ersichtlich, dass durch die Bewegung des Keilschlittens in Richtung des Pfeiles 21 und der Pfeile 22 über den Schubeingriff zwischen dem Keil 23 mit der Rampe 12 dem Riegelbolzen 10 eine axiale Bewegung erteilt werden kann.

Demzufolge kann der Verriegelungsvorgang dadurch durchgeführt werden, dass der Riegelbolzen 10 nach oben bewegt wird, weil der Keilschlitten 20 nach links verschoben wird. Auf diese Weise kann der obere Teil des Riegelbolzen 10 in einen Beschlag eingeführt werden. Bei einer weitergehenden Bewegung des Keilschlittens 20 führt der Riegelbolzen 10 eine Drehbewegung aus, so dass der obere Teil des Riegelbolzens 10 den Container im Beschlag verriegelt. In dieser Lage ist der Container am Fahrzeug verriegelt, so dass der Transportvorgang durchgeführt werden kann.

Beim Entriegelungsvorgang finden die vorangehend geschilderten Bewegungsabläufe in umgekehrter Reihenfolge statt.

## Patentansprüche

1. Vorrichtung zum Verriegeln von Containern auf Fahrzeugen, aufweisend einen Riegelbolzen, der in einem Verriegelungsgehäuse bewegbar gehaltert ist, und einen Antrieb, um den Riegelbolzen zwischen Freigabe- und Riegelstellung hin- und her zu bewegen, **dadurch gekennzeichnet, dass**
der Riegelbolzen (10) sowohl axial bewegbar (14) als auch um seine Achse drehbar (13) in dem Verriegelungsgehäuse gelagert ist,
der Riegelbolzen (10) an seinem im Verriegelungsgehäuse befindlichen Teil an seinem Umfang sowohl mit einem Zahnkranz (11) als auch mit einer zum Umfang des Riegelbolzens tangentialen ansteigenden Rampe (12) ausgebildet ist;
ein Keilschlitten (20) im Verriegelungsgehäuse hin- und herbeweglich (21) und verschwenkbar (22) gehaltert ist und vermittels seines Antriebes (hydraulisch, pneumatisch, elektro-mechanisch oder dergl.) zwischen der der Freigabe- und der der Riegelstellung entsprechenden Stellung antreibbar ist;
der Keilschlitten (20) mit einer Zahnstange (22) ausgebildet ist, die mit dem Zahnkranz (11) des Riegelbolzens (10) während eines Teiles der Bewegung des Keilschlittens im Eingriff ist und dem Riegelbolzen eine 90°-Drehung erteilt und
dass der Keilschlitten (20) mit einer Rampe oder einem Keil (23) ausgebildet ist, der mit der Rampe des Riegelbolzenz (10) während eines anderen Teils der Bewegung des Keilschlittens (20) in Schiebeeingriff angeordnet ist und dem Riegelbolzen eine axiale Bewegung erteilt.

## Claims

1. Device for locking containers on vehicles, comprising a locking bolt movably supported in a locking housing, and a drive, in order to reciprocate the locking bolt between release and locking position, **characterised in that**
the locking bolt (10) is supported in the locking housing such that it is axially movable (14) as well as rotatable around its axis (13),
the locking bolt (10), at its part arranged in the locking housing, is formed with a gear ring (11) as well as a tangential ramp (12) rising towards the circumference of the locking bolt;
a wedge carriage (20) is supported, movable backwards and forwards as well as swivelling, in the locking housing, and is drivable by means of its drive (hydraulic, pneumatic, electro-magnetic or such like) between the release and the position corresponding to the locking position;
the wedge carriage (20) is formed with a tooth rack (22), which is engaged with the gear ring (11) of the locking bolt (10) during part of the movement of the wedge carriage and imparts a rotation by 90° to the locking bolt, and
that the wedge carriage (20) is formed with a ramp or a wedge (23), which is arranged in pushing engagement with the ramp of the locking bolt (10) during another part of the movement of the wedge carriage (20) and imparts an axial movement to the locking bolt.

## Revendications

1. Dispositif de verrouillage de conteneurs sur véhicules automobiles, comportant un boulon de verrouillage, qui est maintenu de façon mobile dans un boîtier de verrouillage, et un entraînement pour déplacer le boulon de verrouillage en avant et en arrière entre la position de déblocage et de verrouillage, **caractérisé en ce que**
le boulon de verrouillage (10) est monté aussi bien de façon mobile sur son axe (14) que rotative autour de son axe (13) dans le boîtier de verrouillage,
le boulon de verrouillage (10) est constitué aussi bien d'une couronne dentée (11) sur les pièces se trouvant dans le boîtier de verrouillage sur sa périphérie que d'une rampe tangentielle (12) montant à la périphérie du boulon de verrouillage ;
une coulisse de clavetage (20) dans le boîtier de verrouillage est montée de façon mobile en avant et en arrière (21) et de manière à tourner sur elle-même (22) et, au moyen de son entraînement (hydraulique, pneumatique, électromécanique, ou similaire), peut être entraînée dans la position correspondante située entre les positions de déblocage et de verrouillage ;
la coulisse de clavetage (20) est constituée d'une pince dentée (22), qui est en prise avec la couronne dentée (11) du boulon de verrouillage (10) au cours d'une partie du déplacement de la coulisse de clavetage et fait tourner le boulon de verrouillage à 90° et
**en ce que** la coulisse de clavetage (20) est constituée d'une rampe ou d'une clavette (23), qui, au cours d'une autre partie du déplacement de la coulisse de clavetage (20), est mise en prise de poussée avec la rampe du boulon de verrouillage (10) et déplace le boulon de verrouillage sur son axe.
